Europäisches Patentamt

European Patent Office

Office européen des brevets

(19)

(11) Veröffentlichungsnummer: **0 132 558**
**B1**

(12) # EUROPÄISCHE PATENTSCHRIFT

(45) Veröffentlichungstag der Patentschrift :
28.06.89

(21) Anmeldenummer : 84106470.2

(22) Anmeldetag : 06.06.84

(51) Int. Cl.⁴ : **B 60 N 1/04**

(54) Gepanzertes Fahrzeug.

(30) Priorität : 23.07.83 DE 3326675

(43) Veröffentlichungstag der Anmeldung :
13.02.85 Patentblatt 85/07

(45) Bekanntmachung des Hinweises auf die Patenterteilung : 28.06.89 Patentblatt 89/26

(84) Benannte Vertragsstaaten :
**CH DE IT LI**

(56) Entgegenhaltungen :
**DE–A– 2 433 699**
**DE–A– 2 544 812**
**DE–A– 2 750 406**
**DE–A– 3 011 805**

(73) Patentinhaber : **Rheinmetall GmbH**
**Ulmenstrasse 125 Postfach 6609**
**D-4000 Düsseldorf (DE)**

(72) Erfinder : **Kesting, Arnold**
**Tucherweg 49**
**D-4010 Hilden (DE)**
Erfinder : **Böer, Wolfgang**
**Kamper Weg 160**
**D-4000 Düsseldorf 12 (DE)**
Erfinder : **Sauerwald, Walter**
**Frauenlobweg 5**
**D-4000 Düsseldorf (DE)**

(74) Vertreter : **Podszus, Burghart, Dipl.-Phys.**
**Rheinmetall GmbH Ulmenstrasse 125 Postfach 6609**
**D-4000 Düsseldorf (DE)**

**Beschreibung**

Die Erfindung betrifft ein gepanzertes Fahrzeug mit einem Panzerturm nach dem Oberbegriff des Patentanspruchs 1.

Bei einem derartigen Fahrzeug ist innerhalb des von der Mannschaft besetzten Turms nur ein geringes Raumangebot vorhanden, so daß die Notwendigkeit besteht, Ausrüstungsteile des Turms, insbesondere Teile der Sitzgelegenheit vor einer als Fluchtweg dienenden Öffnung in der Turmwandung anzuordnen.

Aus der DE-A-24 33 699 ist eine Stuhlanordnung bekannt, die im wesentlichen den Zweck verfolgt, bei allen für den Sitz vorgesehenen Höhenlagen eine funktionsgerechte Bedienmöglichkeit der Bediengeräte in jeweils optimaler Weise sicherzustellen, so daß nachteilige Wirkungen auf den menschlichen Körper vermieden werden. Zur Einstellung verschiedener Höhenlagen ist es notwendig, diesen Stuhl mit zusätzlichen Huborganen auszurüsten, die des weiteren mit zusätzlicher Fremdenergie hydraulisch, pneumatisch oder elektrisch angetrieben werden müssen. Dieser Stuhl ist ausschließlich nur in seiner Höhe lageveränderbar, wobei teilweise die Lehne wegschwenkbar ist. Aufgrund des zusätzlichen Raumbedarfs zur Unterbringung der Huborgane und Antriebseinheiten sowie der lediglich begrenzten Wegschwenkmöglichkeit des Stuhles durch die Stuhllehne, ist diese Anordnung für die Bereitstellung eines Fluchtweges insbesondere in beengten Panzertürmen, nicht zweckdienlich.

Der Erfindung liegt die Aufgabe zugrunde, die Sitzgelegenheit innerhalb eines nur mit einem geringen Raumangebot ausgestatteten Panzerturmes so auszugestalten, daß im Bedarfsfall die bestimmungsgemäß im Turm tätige Bedienungsmannschaft und auch der an einem vom Panzerturm abgesetzten Fahrerplatz tätige Fahrer den Panzerturm und das Fahrzeug über eine heckseitig angeordnete Ausstiegsluke schneller verlassen können.

Diese Aufgabe wird durch die in Patentanspruch 1 angegebene Erfindung gelöst.

Vorteilhafte Ausgestaltungen der Erfindung gehen aus den Unteransprüchen hervor.

Die Erfindung wird nachfolgend unter Bezug auf die Zeichnung näher erläutert.

Dabei zeigt:

Figur 1 : eine Schnittdarstellung durch den Turmbereich des gepanzerten Fahrzeuges ;

Figur 2 : eine Seitenansicht einer im Panzerturm angeordneten Sitzgelegenheit.

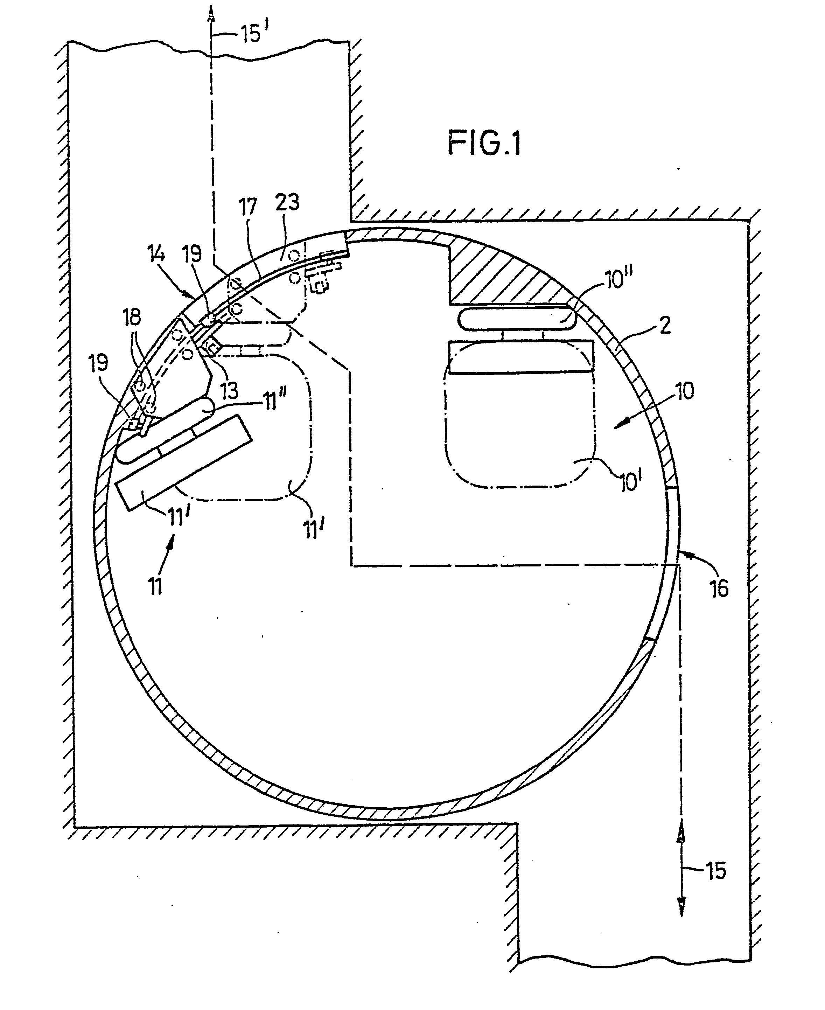

Fig. 1 zeigt mit einem im wesentlichen durch den Bereich des Panzerturms 2 eines gepanzerten Fahrzeugs geführten Schnitt nur die für die Erfindung wesentlichen Bereiche des Fahrzeugs und Teile des Panzerturms 2. Das Innere des gepanzerten Fahrzeugs ist so gestaltet, daß sämtlich Mitgliede der Besatzung, auch der an einem vom Panzerturm 2 abgesetzten Fahrerplatz tätige Fahrer, sowohl durch eine nicht dargestellte Ausstiegsluke im Dach des Fahrzeugs als auch durch eine im hinteren Bereich des Fahrzeugs liegende Luke ein- bzw. aussteigen können. Um seinen im vorderen Bereich des Fahrzeugs liegenden Platz einnehmen bzw. verlassen zu können, muß sich der Fahrer in Richtung des Doppelpfeils 15 durch einen im Panzerturm 2 angeordneten Durchgang 16 hindurchbewegen. Die gesamte Besatzung, also sowohl Fahrer als auch Turmbesatzung, können den Bereich des Panzerturms 2 durch eine in Heckrichtung des Fahrzeugs, also in Richtung des Pfeils 15' führende Öffnung 14 verlassen. Im Normalbetrieb des gepanzerten Fahrzeugs nimmt die Turmbesatzung jedoch Sitzgelegenheiten 10, 11 ein, wobei eine der Sitzgelegenheiten, nämlich der Stuhl 11, aus Platzgründen vor der als Fluchtweg dienenden Öffnung 14 angeordnet ist und diese für einen Durchgang versperrt.

Um notfalls den Fluchtweg für einen Durchgang freizumachen, ist der Stuhl 11 hinsichtlich seiner räumlichen Lage im Panzerturm 2 veränderbar und in seiner jeweiligen Ruhelage arretierbar angeordnet. Dazu ist der Stuhl 11 an einem Rollenwagen 23 befestigt, der vor der Innenwandung des Panzerturms 2 auf einer Gleitbahn gelagert, zumindest auf einem Teil eines Kreisumfangs zwischen zwei Endstellungen verfahrbar ist.

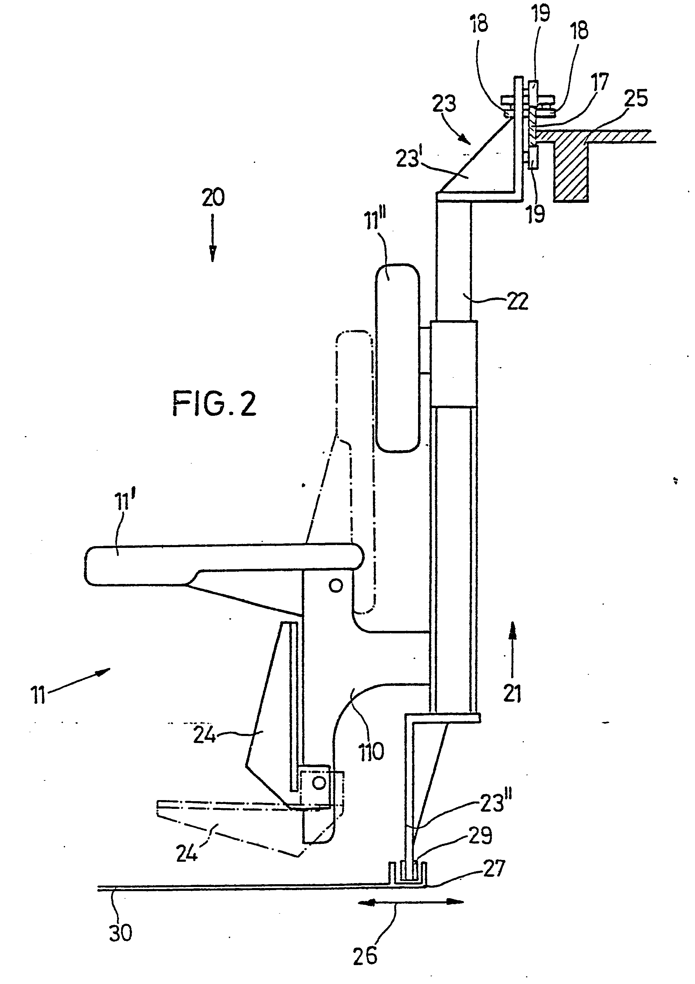

Die Gleitbahn besteht aus einer ersten Laufschiene 17 und einer zweiten Laufschiene 27, wobei die erste Laufschiene 17 an einer in das Innere des Turms 2 hineinragenden Zarge 25 und die zweite U-förmig ausgebildete Laufschiene 27 auf dem Turmkorbboden 30 liegend befestigt ist. Mittels eines Arretierbolzens 13, der in den beiden Endstellungen des Rollenwagens 23 in eine Bohrung der Laufschiene 17 einrastet, wird der Stuhl 11 in seiner jeweiligen Endstellung fixiert. Der Rollenwagen 23 umfaßt ein vertikal angeordnetes Rohr 22, das die den Laufschienen 17, 27 benachbarten Teile 23', 23" des Rollenwagens 23 verbindet. Das Oberteil 23' des Rollenwagens 23 trägt mindestens je zwei auf senkrecht zueinander ausgerichteten Achsen jeweils paarweise angeordnete Laufrollen 18, 19, die auf Gleitflächen der ersten Laufschiene 17 aufliegen und so die Auflagekraft des Sitzes 11 aufnehmen und weiter für dessen Seitenführung verantwortlich sind. Von unten auf den Sitz 11 einwirkende Kräfte werden dabei insbesondere von den Laufrollen 19 aufgenommen, die auf die untere Fläche der Laufschiene wirken. Das Unterteil 23" des Rollenwagens 23 greift in die U-förmig ausgebildete zweite Laufschiene 27 ein, die auf dem Turmkorbboden 30 liegend befestigt ist. Zwecks Reibungsverminderung sind an dem in die U-förmige Laufschiene 27 eingreifenden Unterteil 23' des Rollenwagens 23 Gleitbeläge 29 befestigt. Die Führung des Unterteils 23' des Rollenwagens 23 sichert den Stuhl 11 insbesondere gegen in Richtung des Doppelpfeils 26 (Fig. 2) gerichtete Krafteinwirkungen.

Um eine optimale Anpassung an die günstigste Arbeitsposition zu ermöglichen, ist der Stuhl 11 in seiner Sitzhöhe verstellbar angeordnet. Der Stuhl 11 und die Mittel zur Verstellung seiner Höhe sind dabei am Rohr 22 des Rollenwagens 23 gelagert.

Um in bestimmten Gefechtssituationen der Turmmannschaft trotz des beengten Raumangebots ein Stehen auf dem Turmkorbboden zu ermöglichen, ist der Sitz 11 zweckmäßig als Klappstuhl ausgebildet. Die um eine waagerecht liegende Drehachse nach oben abklappbare Sitzfläche 11' legt sich dabei federnd gegen die gleichzeitig als Anschlag dienende Rückenstütze 11" an, die unabhängig vom Stuhl 11 ebenfalls am Rohr 22 geführt in ihrer Höhenlage verstellbar und fixierbar ist.

Um der Bedienungsmannschaft — unabhängig von der jeweiligen Körpergröße — eine optimale Sitz- und Arbeitsposition zu gewährleisten, ist eine mit dem Sitzteil 110 verbundene klappbar ausgebildete Fußstütze 24 vorgesehen. Die Fußstütze 24 ist unabhängig von der Sitzschlage 11' klappbar. Sie bietet daher nach Hochklappen der Sitzschale 11' eine über dem Turmkorbboden 30 liegende Standfläche und ermöglicht daher auch kleinwüchsigen Personen den Ausblick aus der geöffneten Luke im Oberteil des Panzerturms 2.

Im normalen Betriebszustand des gepanzerten Fahrzeugs hat der Fahrer seinen im vorderen Teil des Fahrzeugs liegenden Arbeitsplatz durch die Luke 16 des Panzerturms 2 hindurch in Richtung des Doppelpfeils 15 eingenommen. Die Turmbesatzung sitzt auf den in Normalposition befindlichen Sitzen 10, 11, wobei sich der Sitz 11 vor der Öffnung 14 befindet und diese versperrt.

Insbesondere in einer Notsituation, wenn ein Ausstieg aus der oben im Panzerturm 2 befindlichen, in der Zeichnung nicht dargestellten Ausstiegsluke nicht ratsam erscheint, bleibt der Turmbesatzung und dem Fahrer ein Fluchtweg über die Öffnung 14 in Richtung des Pfeils 15' zum Heck des Fahrzeugs offen. Dazu wird der Stuhl 11 nach Hochklappen der Sitzschale 11' vermittels des Rollenwagens 23 in eine zweite Ruhelage verfahren, in der er die Öffnung 14 freigibt. Durch die nun zugängliche Öffnung 14 können Turmbesatzung und Fahrer den Panzerturm 2 in Richtung des Pfeils 15' zum Heck des gepanzerten Fahrzeugs verlassen. Wenn es die Situation erlaubt, können gleichzeitig die Öffnung 14 und die im oberen Teil des Panzerturms 2 befindliche Ausstiegsluke, die in der Zeichnung nicht dargestellt ist, zum Ausstieg benutzt werden. Dadurch kann das Fahrzeug noch schneller geräumt werden.

## Patentansprüche

1. Gepanzertes Fahrzeug mit einem Panzerturm (2), einem vom Panzerturm abgesetzten, über diesen zugänglichen Fahrerplatz mit im Turm (2) und im Heck angeordneten Ausstiegsluken sowie mit Sitzgelegenheiten (10, 11) für die Turmbesatzung, dadurch gekennzeichnet, daß als Sitzgelegenheit mindestens ein hinsichtlich seiner räumlichen Lage im Panzerturm (2) veränderbarer und in seiner jeweiligen Ruhelage arretierbarer Stuhl (11) vorgesehen ist, der an einem Rollenwagen (23) befestigt ist, welcher vor der Innenwandung des Panzerturms (2) auf einer Gleitbahn gelagert, zumindest auf einem Teil eines Kreisumfangs zwischen zwei Endstellungen manuell verfahrbar ist.

2. Gepanzertes Fahrzeug nach Anspruch 1, dadurch gekennzeichnet, daß die Gleitbahn aus einer ersten Laufschiene (17) und einer zweiten Laufschiene (27) besteht, wobei die erste Laufschiene (17) an einer in das Innere des Turms (2) hineinragenden Zarge (25) und die zweite, U-förmig ausgebildete Laufschiene (27) auf dem Turmkorbboden (30) liegend befestigt ist.

3. Gepanzertes Fahrzeug nach einem der Ansprüche 1 und 2, dadurch gekennzeichnet, daß der Rollenwagen (23) ein vertikal angeordnetes Rohr (22) umfaßt, das die den Laufschienen (17, 27) benachbarten Teile (23', 23") des Rollenwagens (23) verbindet.

4. Gepanzertes Fahrzeug nach einem der Ansprüche 1 bis 3, dadurch gekennzeichnet, daß das Oberteil (23") des Rollenwagens (23) mindestens je zwei auf senkrecht zueinander ausgerichteten Achsen jeweils paarweise angeordnete Laufrollen (18, 19) trägt, die auf Gleitflächen der ersten Laufschiene (17) aufliegen.

5. Gepanzertes Fahrzeug nach einem der Ansprüche 1 bis 4, dadurch gekennzeichnet, daß das Unterteil (23') des Rollenwagens (23) in die U-förmig ausgebildete zweite Laufschiene (27) eingreift und zwecks Reibungsverminderung mit Gleitbelägen (29) belegt ist.

6. Gepanzertes Fahrzeug nach einem der Ansprüche 1 bis 5, dadurch gekennzeichnet, daß der Stuhl (11) als in der Sitzhöhe verstellbarer Klappstuhl ausgebildet ist und daß die Mittel zur Höhenverstellung am Rohr (22) gehaltert bzw. in dieses integriert sind.

7. Gepanzertes Fahrzeug nach einem der Ansprüche 1 bis 6, dadurch gekennzeichnet, daß eine von der Sitzschale (11') getrennte Rückenstütze (11") vorgesehen ist, die gleitbar und in der Höhe verstellbar am Rohr (22) gelagert ist.

8. Gepanzertes Fahrzeug nach einem der Ansprüche 1 bis 7, dadurch gekennzeichnet, daß die Rückenstütze (11") als Anschlag für die Sitzschale (11') in hochgeklappter Stellung vorgesehen ist.

9. Gepanzertes Fahrzeug nach einem der Ansprüche 1 bis 8, dadurch gekennzeichnet, daß am Träger (110) der Sitzschale (11') eine klappbare Fußstütze (24) angeordnet ist.

## Claims

1. Armoured vehicle with an armoured turret (2), a seat for a driver offset from the said turret and accessible therethrough, with exit hatchways in the turret (2) and in the rear and also with seating facilities (10, 11) for the crew of the turret, characterised by the fact that the seating facilities consist of at least one seat (11) spatially movable in position in the turret (2) and capable of being locked in a fixed position as required at any instant and secured to a roller carriage (23) which is mounted on a slide in front of the internal wall of the turret (2) and manually movable over at least part of the periphery between two end positions.

2. Armoured vehicle in accordance with Claim 1, characterised by the fact that the slide consists of a first runner rail (17) and a second runner rail (27), the first runner rail (17) being affixed to a frame (25) extending into the interior of the turret (2) and the second runner rail (27) of U-shape, being affixed in a horizontal position to the turret cage floor (30).

3. Armoured vehicle in accordance with one of Claims 1 and 2, characterised by the fact that the roller carriage (23) comprises a vertically positioned tube (22) which interconnects the parts (23', 23'') of the roller carriage (23) which are adjacent to the runner rails (17, 27).

4. Armoured vehicle in accordance with one of Claims 1 to 3, characterised by the fact that the upper part (23'') of the roller carriage (23) carries at least two pairs of rollers (18, 19) on axes perpendicular to one another and resting on slide surfaces of the first runner rail (17).

5. Armoured vehicle in accordance with one of Claims 1 to 4, characterised by the fact that the lower part (23') of the roller carriage (23) engages the U-shaped second runner rail (27) and is provided with sliding friction coatings (29) as a friction-reducing means.

6. Armoured vehicle in accordance with one of Claims 1 to 5, characterised by the fact that the seat (11) is constructed as a drop-down stool adjustable in height and with means for the adjustment of height mounted on or integrated into the tube (22).

7. Armoured vehicle in accordance with one of Claims 1 to 6, characterised by the fact that a back support (11'') is provided which is separate from the seat (11') and which is slidably mounted on the tube (22) in such a way as to be adjustable in height.

8. Armoured vehicle in accordance with one of Claims 1 to 7, characterised by the fact that the back support (11'') is provided as a stop for the seat (11') in its raised position.

9. Armoured vehicle in accordance with one of Claims 1 to 8, characterised by the fact that a hinged foot rest (24) is provided on the support (110) of the seat (11').

**Revendications**

1. Véhicule blindé comportant une tourelle blindée (2), une place de conducteur déportée par rapport à la tourelle et accessible par celle-ci, des écoutilles disposées dans la tourelle (2) et à l'arrière ainsi que des sièges (10, 11) pour l'équipage de la tourelle, caractérisé en ce qu'on prévoit comme siège au moins un fauteuil (11) dont on peut faire varier la position spatiale dans la tourelle (2) et dont on peut bloquer la position de repos, lequel fauteuil est fixé sur un chariot à galets (23) qui est monté sur une glissière devant la paroi intérieure de la tourelle (2) et peut être déplacé à la main sur un arc de cercle entre deux positions terminales.

2. Véhicule blindé selon la revendication 1, caractérisé en ce que la glissière est constituée par un premier rail de roulement (17) et un deuxième rail de roulement (27), le premier rail de roulement (17) étant fixé sur un châssis (25) saillant dans l'intérieur de la tourelle (2) et le deuxième rail de roulement (27) en forme du U étant fixé à plat sur le fond de la tourelle (30) en forme de corbeille.

3. Véhicule blindé selon l'une des revendications 1 et 2, caractérisé en ce que le chariot à galets (23) comporte un tube (22) disposé verticalement, qui relie les parties (23', 23'') du chariot à galets (23) proches des rails de roulement (17, 27).

4. Véhicule blindé selon l'une des revendications 1 à 3, caractérisé en ce que la partie supérieure (23'') du chariot à galets (23) porte au moins deux galets de roulement (18, 19) disposés respectivement par paire sur des axes orientés perpendiculairement l'un à l'autre, lesquels galets appuient sur des surfaces de glissement du premier rail de roulement (17).

5. Véhicule blindé selon l'une des revendications 1 à 4, caractérisé en ce que la partie inférieure (23') du chariot à galets (23) pénètre dans le second rail de roulement (27) en forme de U et est revêtue de revêtements de glissement (29) pour réduire le frottement.

6. Véhicule blindé selon l'une des revendications 1 à 5, caractérisé en ce que le fauteuil (11) est réalisé sous forme de siège rabattable dont la hauteur d'assise est réglable, et en ce que les moyens pour le réglage en hauteur sont fixés sur le tube (22) ou intégrés à celui-ci.

7. Véhicule blindé selon l'une des revendications 1 à 6, caractérisé en ce qu'on prévoit un appui dorsal (11') séparé de la coquille d'assise (11'), lequel est monté coulissant et réglable en hauteur sur le tube (22).

8. Véhicule blindé selon l'une des revendications 1 à 7, caractérisé en ce que l'appui dorsal (11') est prévu comme butée pour la coquille d'assise (11') en position rabattue vers le haut.

9. Véhicule blindé selon l'une des revendications 1 à 8, caractérisé en ce qu'un support de pieds (24) rabattable est disposé sur le support (110) de la coquille d'assise (24).

FIG.1

FIG.2